Europäisches Patentamt

European Patent Office

Office européen des brevets

(11) Publication number: **0 227 574**
**A2**

(12) # EUROPEAN PATENT APPLICATION

(21) Application number: 86630185.6

(22) Date of filing: 05.12.86

(51) Int. Cl.⁴: **B 64 C 25/46**

(30) Priority: 16.12.85 US 809604

(43) Date of publication of application:
01.07.87 Bulletin 87/27

(84) Designated Contracting States: **DE FR GB IT**

(71) Applicant: **GOODYEAR AEROSPACE CORPORATION**
**1210 Massillon Road**
**Akron, OH 44315 (US)**

(72) Inventor: **Beck, Arnold A.**
**8453 Glenridge N.W.**
**Clinton Ohio 44216 (US)**

(74) Representative: **Weyland, Joseph Jean Pierre**
**Goodyear Technical Center Luxembourg Patent**
**Department Avenue Gordon Smith**
**L-7750 Colmar-Berg (LU)**

(54) Torque limit control for antiskid system.

(57) A brake control system (10) for an aircraft is provided wherein an antiskid control circuit (24) is adapted to release brake pressure upon sensing undesirable wheel speed excursions. Connected in parallel to the antiskid control circuit (24) is a torque control circuit (38) which senses the instantaneous torque at the brake (18) of each wheel (14) and causes a release of brake torque by releasing brake pressure when the torque is sensed to have exceeded a threshold level. The torque signal above such threshold will also cause a reduction in gain of the antiskid control circuit (24). in order to maintain high antiskid braking performance for those conditions which cause higher than normal torque to be developed by the brake.

FIG-1

EP 0 227 574 A2

Bundesdruckerei Berlin

**Description**

TORQUE LIMIT CONTROL FOR ANTISKID SYSTEM

TECHNICAL FIELD

The invention herein resides in the art of brake control systems and, more particularly, for such systems used in an aircraft having antiskid control apparatus and capabilities. Succinctly. the invention relates to a control circuit for monitoring brake torque and achieving the reduction of brake torque when it exceeds a proscribed level.

BACKGROUND ART

Antiskid systems have been well known for many years for use in association with the braked wheels of vehicles. Typically, such systems are incorporated to optimize braking efficiency, seeking to maintain the braking effort near the peak of the mu-slip curve characteristic for the vehicle and wheel.

Presently known antiskid systems are concerned primarily with braking pressure, monitoring instantaneous wheel speed and appropriately relieving brake pressure in the event that the wheel speed decreases at an undesirable rate. However, since it is brake torque that actually slows the wheels, the antiskid system design has to be based on a predicted relationship between brake pressure and brake torque. For some types of brakes this relationship is not always predictable, which can lead to degraded braking performance.

Previously known antiskid systems which have been totally pressure responsive can be erratic in operation. The pilots of such aircrafts have found smooth braking to be difficult to attain because the responsiveness of such previously known braking systems have not been predictable or repeatable.

DISCLOSURE OF THE INVENTION

In light of the foregoing, it is the first aspect of the invention to provide torque limiting control to a braking system which includes an antiskid control unit which is pressure operational and/or dependent.

Another aspect of the invention is the provision of an antiskid system which is torque responsive as well as pressure responsive.

Still a further aspect of the invention is the provision of an add-on circuit to presently existing antiskid control systems for purposes of limiting torque application and providing antiskid gain adjustment.

Yet another aspect of the invention is the provision of torque limitations to an antiskid control system which may be easily implemented in a cost-effective manner using state of the art elements and devices.

The foregoing and other aspects of the invention which will become apparent as the detailed description proceeds are achieved by an antiskid system. comprising: a braked wheel: an antiskid valve connected to said wheel: a valve driver connected to said antiskid valve. said valve driver receiving an antiskid signal and providing a first output signal to said valve driver as a function thereof; and a torque control circuit interconnected between said braked wheel and said valve driver and generating a second output signal according to the braking torque applied thereto. said second output signal being received by said valve driver and summed with said first output signal.

Additional aspects of the invention are attained by a brake control system for a wheeled vehicle, comprising: first means associated with a wheel of said vehicle for generating a first signal corresponding to the instantaneous rotational speed thereof; second means associated with said wheel for generating a second signal corresponding to instantaneous brake torque at said wheel; an antiskid control circuit receiving said first signal and generating therefrom an antiskid signal; and an antiskid brake valve associated with said wheel and receiving said antiskid signal and said second signal and modifying braking action at said wheel as a function thereof.

DESCRIPTION OF DRAWINGS

For a complete understanding of the objects, techniques, and structure of the invention reference should be had to the following detailed description and accompanying drawings wherein:

Fig. I is a block diagram of a brake control system utilizing the concept of the invention; and

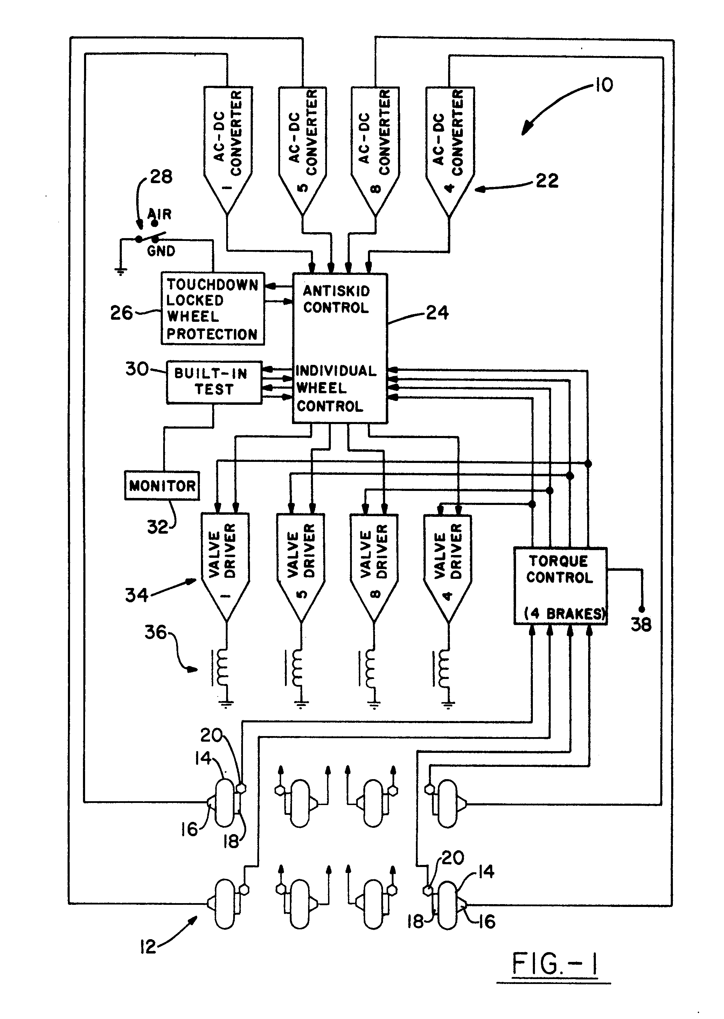

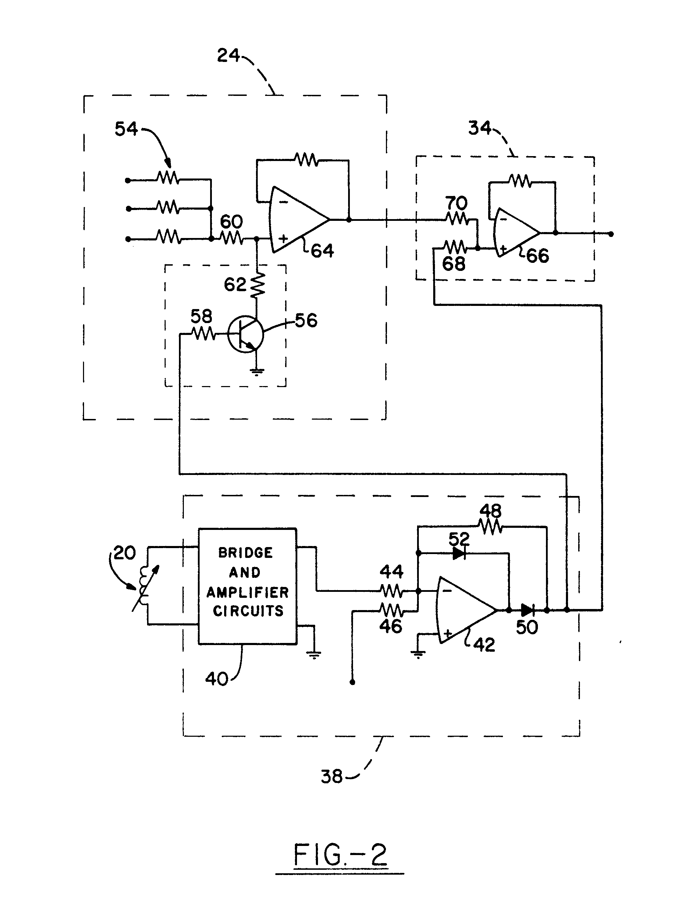

Fig. 2 is a circuit schematic of the torque control and gain adjustment circuitry of the invention.

BEST MODE FOR CARRYING OUT THE INVENTION

Referring now to the drawings and more particularly Fig. I, it can be seen that an antiskid system according to the invention is indicated generally by the numeral I0. The system shown communicates with four braked wheels of an aircraft. such wheels being designated generally by the numeral I2. The specific system shown in Fig. I is adapted for controlling the activity of the four outboard wheels of an aircraft, it being understood that the inboard wheels would be similarly controlled by a substantially identical circuit. Suffice it to say at this time that the subject aircraft has four pairs of braked wheels.

Each of the wheels I4 has associated therewith a wheel speed transducer I6 for presenting an output signal corresponding to the instantaneous rotational speed of the wheel. In standard fashion, a brake I8 is also associated with the wheel I4. the brake I8 typically being a stack of disks keyed to the wheel or axle. Associated with the brake I8 is a torque transducer 20. adapted for presenting an output signal corresponding to the instantaneous torque generated at the associated brake.

The outputs of the wheel speed transducers I6 are applied to AC-DC converters 22, one being provided for each of the wheels I4. As is well known in the art, the outputs of the converters 22 are varying DC signals having an amplitude corresponding to the instantaneous rotational speed of the associated wheel. These output signals are applied to an antiskid control circuit 24 which, in standard fashion, presents an output signal when skidding activity or incipient skids are sensed. Such features are now well known in the art, and it should be sufficient to say that the outputs of the antiskid control circuits 24 are tailored to release brake pressure for which wheels are excessively decelerating and to allow such wheels to return to normal braking action.

Also provided as a part of the system I0 is touchdown locked wheel protection, assuring that the wheels are freely rotational upon touchdown of the aircraft. Such touchdown is sensed in standard fashion by the strut switch 28. Also provided as part and parcel of the system I0 is a built-in test circuit 30 for purposes of testing and monitoring the operational features of the circuit I0 prior to touchdown. A monitor 32 is provided for displaying the test results.

As discussed above, the output of the antiskid control circuit 24 is provided to a specific antiskid valve driver 34. It will be observed that there are four such valve drivers, one associated with the antiskid brake valve associated with each of the outboard wheels I4. The antiskid control signal from the circuit 24 is directed to the appropriate valve driver 34 to achieve the desired brake release. The brake valves 36, being electrically actuated coils, are connected to the valve drivers 34 for respective actuation.

A torque control circuit 38 is provided in association with the torque transducer 20 associated with the brake I8 of each of the wheels I4. The torque control circuit 38 receives from the transducer 20 a signal indicative of instantaneous brake torque and, upon sensing that such torque is excessive or exceeds a threshold value, an appropriate output signal is generated and applied to the associated valve driver 34 to effect appropriate pressure reduction of the associated brake I8. As will be understood later herein, the amplitude of the output signal of the torque control circuit 38 is dependent upon the degree of excessive brake torque above the threshold. As will also be discussed later, the output of the torque control circuit 38 is also applied to the antiskid control circuit 24 to adjust the gain thereof as a function of the torque error signal.

With reference now to Fig. 2, the detailed circuitry of one leg of the torque control circuit 38 can be seen. It will be understood that the leg shown in Fig. 2 is for one of the outboard wheels I4, there being four identical such circuits within the block 38, one for each of the four outboard wheels.

As shown, the output of the torque transducer 20 is applied to a bridge balance circuit 40 which, as is well known in the art, comprises a strain gauge bridge for balancing, amplifying, and buffering the output of the torque transducer 20 to a usable level. The output of the bridge balance circuit 40 is applied to the amplifier 42 through the summing point defined by the junction of the resistors 44,46. It will be noted that the resistor 44 passes the torque signal from the bridge balance circuit 40 to the summing point where it is summed with a variable torque threshold level provided through the resistor 46. This variable torque threshold is preferably a function of metered pressure. In a preferred embodiment of the invention, the output of the bridge balance circuit 40 is a negative voltage signal, while the torque threshold provided through the resistor 46 to the summing point is a positive voltage signal. Accordingly, when the torque signal from the circuit 40 is greater than the torque threshold, the output of the amplifier 42, operating as an inverting comparator, is a positive voltage signal, indicating the necessity for releasing brake torque by the application of the output of the amplifier 42 to the appropriate valve driver 34. When the output from the bridge balance circuit 40 is less than the torque threshold through the resistor 46, the output of the amplifier 42 is negative, but is blocked by the diode arrangement 50,52. Effectively, the diode 50 clamps the output of the amplifier 42.

It will be noted that a feedback resistor 48 is provided in standard fashion to provide, in combination with the resistors 44,46, a characteristic gain for the amplifier 42. Accordingly, the output of the circuit 38, as applied to the valve drivers 34, is a torque error signal multiplied by a constant which is characteristic of the gain of the amplifier 42. In other words, a proportional torque error signal is generated by the circuit 38.

As further shown in Fig. 2, the antiskid control signals generated by the antiskid control circuit are summed at the summing point of the three resistors 54. Typically, these three antiskid control signals comprise proportional, derivative, and integral error signals, individually applied to the summing point via a uniquely associated resistor of the group 54. The summation of these error signals is applied to the amplifier 64 through the resistor 60, the output of the amplifier 64 being applied to the valve driver 34 for appropriate modulation of brake pressure.

The output of the amplifier 42, indicating that the torque threshold has been exceeded, is applied to the transistor 56 through the base resistor 58. The transistor 56 is thus gated into conduction, reducing the input to the amplifier 64 proportionate to the voltage divider established by the resistors 60,62. Accordingly, the torque error signal from the amplifier 42 serves to reduce the antiskid error signal from the amplifier 64 which is applied to the valve driver 34. Thus, the circuit 56,58,62 serves as a gain adjust circuit for the antiskid control circuit 24 when torque limits are exceeded. This maintains high antiskid braking performance for those conditions which cause higher than normal torque to be developed by the brake.

As further shown in Fig. 2, the torque error signal from the amplifier 42 and the antiskid error signal from the amplifier 64 are applied to the amplifier 66 of the valve driver 34 via the summing resistors 68,70. Accordingly, the output of the valve driver 34 is the sum of the two error signals, serving to appropriately reduce brake pressure. The torque error signal is a function of a variable torque threshold, while the antiskid error signal is a function of a variable gain estalished by the torque error signal.

Thus it can be seen that the antiskid valves 36, controlled by associated valve drivers 34. may be cause to release the brake pressure as a result of an output from the antiskid control circuit 24 or from the torque control circuit 38 or from a summation of both signals. Accordingly. this system is responsive to both adverse perturbations in wheel speed and brake torque. Smooth. reliable and predictable braking is thus achievable with the system of the invention presented herein.

Thus it can be seen that the objects of the invention have been satisfied by the structure presented hereinabove. While in accordance with the patent statutes only the best mode and preferred embodiment of the invention have been presented and described in detail. it is to be understood that the invention is not limited thereto or thereby. Accordingly. for an appreciation of the true scope and breadth of the invention reference should be had to the following claims.

## Claims

1. An antiskid system, comprising:
a braked wheel (l4);
an antiskid valve (36) connected to said wheel;
a valve driver (34) connected to said antiskid valve. said valve driver receiving an antiskid signal and providing a first output signal to said valve driver as a function thereof: and characterized by:
a torque control circuit (38) interconnected between said braked wheel and said valve driver and generating a second output signal according to the braking torque applied thereto, said second output signal being received by said valve driver and summed with said first output signal.

2. The antiskid system according to Claim l further characterized in that said torque control circuit comprises a torque transducer (20) connected to said braked wheel and providing a torque signal corresponding to instantaneous braking torque at said braked wheel.

3. The antiskid system according to Claim 2 further characterized in that said torque control circuit comprises comparator means (42) connected to said torque transducer for receiving said torque signal. comparing said torque signal to a threshold level. and generating said second output signal when said torque signal exceeds said threshold level.

4. The antiskid system according to Claim 3 further characterized in that said comparator means includes a clamp (50) on an output thereof. limiting excursions of said second output signal.

5. The antiskid system according to Claim 4 further characterized in that said comparator means has a characteristic gain associated therewith.

6. The antiskid system according to Claim 4 further characterized in that said antiskid signal is a function of wheel speed and said torque signal is a function of brake torque. said antiskid and torque signals combining to control said valve driver.

7. The antiskid system according to Claim 4 further characterized by an antiskid circuit (24) generating said antiskid signal. said second output signal being applied to said antiskid circuit to adjust a characteristic gain thereof.

0227574

FIG.-1

0227574

FIG.-2